# EUROPEAN PATENT SPECIFICATION

(11) **EP 3 291 592 B1**
(45) Date of publication and mention of the grant of the patent: **29.01.2020**
(21) Application number: 15890654.5
(22) Date of filing: 23.12.2015
(51) Int. Cl.: H04W 4/70, H04W 24/10

(54) **MONITORING MANAGEMENT METHOD AND APPARATUS**
VERFAHREN UND VORRICHTUNG ZUR ÜBERWACHUNGSVERWALTUNG
PROCÉDÉ ET APPAREIL DE GESTION DE SURVEILLANCE

(30) Priority: 28.04.2015 CN 201510209460
(43) Date of publication of application: 07.03.2018
(73) Proprietor: ZTE Corporation, Shenzhen, Guangdong 518057 (CN)
(72) Inventor: WU, Hao, Shenzhen Guangdong 518057 (CN)
(74) Representative: Baudler, Ron
(86) International application number: PCT/CN2015/098403
(87) International publication number: WO 2016/173280

(56) References cited:
- WO-A1-2014/056344
- WO-A1-2014/056345
- WO-A1-2014/129802
- WO-A1-2014/185754
- CN-A- 103 618 800
- CN-A- 104 093 118
- CN-A- 104 168 597
- US-A1- 2013 346 596
- "Functional Architecture", TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. oneM2M, no. V1.0.0, 1 February 2015 (2015-02-01), XP014248274,
- INTERDIGITAL ET AL: "Draft TR-0001 V1.5.0", REQ-2015-0542-DRAFT_TR-0001_V1_5_0.ZIP, ONEM2M , vol. WG1 - Requirements, REQ, no. conference = REQ16.2, 20150427 - 20150427 10 April 2015 (2015-04-10), pages 1-151, XP084010968, Retrieved from the Internet: URL:http://member.onem2m.org/Application/d ocumentapp/downloadimmediate/default.aspx? docID=11037 [retrieved on 2015-04-10]

## Description

### TECHNICAL FIELD

The invention relates to the field of communications, and particularly to a monitoring management method and device.

### BACKGROUND

With development of sciences and technologies, various communication networks play a more and more important role in people's lives. For example, a Machine to Machine (M2M) communication network is formed by various M2M nodes and a bearer network. The M2M nodes communicate with one another through the bearer network. Each M2M node includes at least an Application Entity (AE) or a common service entity.

An application entity is a logical unit that executes a practical M2M application, and a common service entity is a logical unit that manages and serves the application.

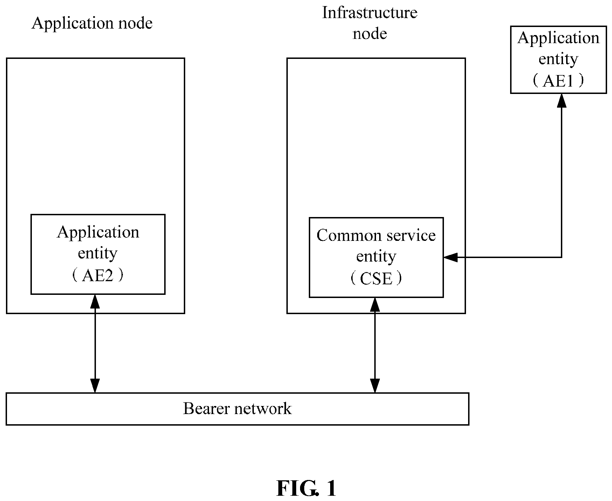

Communication between M2M applications is implemented through a common service entity, i.e. Common channel Signaling Equipment (CSE). The M2M applications are registered with the CSE, and then resources on the CSE are operated to implement interaction between the applications. As illustrated in FIG. 1, FIG. 1 is a diagram of an M2M system architecture in a related technology.

In an M2M system architecture, an application node is an end terminal for executing an application, such as a smart electric meter, a temperature measurement and control sensor, a fire alarm and an intelligent home appliance. An infrastructure node is a network-side server. An application registered with the infrastructure node may be a management platform of an M2M service provider.

In FIG. 1, an application entity AE1 on a network side is registered with CSE on an infrastructure node, and then the CSE on the infrastructure node is called as local CSE or registration CSE of the application entity AE1. Similarly, an AE2 is registered with the CSE on the infrastructure node, and then the CSE on the infrastructure node is called as local CSE or registration CSE of the AE2.

Interaction between the AE1 and the AE2 is implemented by mutually accessing resources created by the opposite parties on the registration CSE, and the AE2 needs to be connected to the CSE on the infrastructure node through a bearer network.

The AE1 may send a request to the CSE to request the CSE to monitor a state of a node where the AE2 is located, for example, to monitor whether the node is online and whether the node moves. However, it is to be noted that, when there are a plurality of the AEs1, each of the plurality of AEsl are required to interact with the AE2 through the CSE if the AEs1 all need monitor the state of the node where the AE2 is located. This makes the CSE acquire the same state information of the AE2 for many times, which will cause resource waste.

In addition, with continuous extension of application scenarios, an original monitoring mechanism cannot meet a new requirement anymore. For example, when the AE1 needs to know about how many online terminals are in a specified region, for example, when a management platform of a smart grid needs to know about how many online (i.e., normally running) smart electric meters of a community every month, it is difficult for original monitoring management only for a single terminal to process such a case.

For the problem of resource waste formed when a target to be monitored is monitored in the related technology, there is yet no effective solution.

WO2014129802 (A1) discloses a method and an apparatus for modifying a machine-to-machine (M2M) service setting in an M2M system, comprising the steps of: transmitting at least one policy information to at least one device, wherein each of the at least one policy information comprises scope information and condition information; and if the state of an M2M gateway corresponds to a state of which the condition information is indicative, transmitting a first notification indicative of a state change of the M2M gateway to a device of which the scope information is indicative.

WO2014185754 (A1) relates to a method performed in a machine-to-machine (M2M) device comprising a first resource and a second resource, and an apparatus for the same. The method comprises the steps of: adding first condition information to filtering properties of the first resource; receiving, from a first entity, a request message including first information indicating an address corresponding to the second resource and second information indicating an operation to be performed in the device; and transmitting a notification message to a second entity indicated by address information set in the first resource when predetermined conditions are satisfied, wherein the predetermined conditions include (1) a condition that the second resource should correspond to a parent resource of the first resource and (2) a condition that the first condition information should include a parameter corresponding to the operation, and wherein the first resource and the second resource respectively show data structures which are uniquely addressable by using unique addresses.

WO2014056344 (A1) discloses a method and device for monitoring. The method comprises: performing monitoring, by a gateway, to a monitored object set in monitoring configuration information, and obtaining a monitoring result (S102); reporting, by the gateway, the monitoring result to a machine-to-machine (M2M) business platform or an M2M application server according to the report configuration set in the monitoring configuration information (S104). With the present invention, the effect is achieved that the M2M network is able to grasp various kinds of state parameters to execute statistics according to demands, and also, to obtain fault alarm information timely according to the configuration to execute corresponding operations timely.

WO2014056345 (A1) discloses a management method and apparatus for monitoring task, the method comprising: a gateway receives a monitoring configuration information transmitted by a machine to machine (M2M) business platform or M2M application server, wherein there are management parameters for managing the monitoring task in the monitoring configuration information; the gateway is adapted to manage the monitoring task on the basis of management parameters.

### SUMMARY

The invention provides a monitoring management method and device, so as to at least solve the problem of resource waste formed when a target to be monitored is monitored in the related technology.

The features of the method and device according to the present invention are defined in the independent claims, and the preferable features according to the present invention are defined in the dependent claims.

Exemplary embodiments are described in the following to illustrate the invention.

According to embodiments, the request message configured to create the resource is received from the monitoring initiator, wherein the resource is configured for monitoring management, and the request message contains at least the following parameter: the event to be monitored; the resource is created according to the request message, and the attribute of the resource is created according to the parameter included in the request message; the event to be monitored is monitored according to monitoring identifier attribute of the resource and at least one of attributes obtained by updating an identifier attribute of the target to be monitored, an attribute indicating an event to be monitored, an attribute indicating a processing manner performed after occurrence of the event, a monitoring time length attribute, a monitoring report number attribute, an attribute indicating a time when a monitoring ends and an attribute indicating a time when a monitoring starts, respectively.

Alternatively, the step that the monitoring report is stored may include that: the monitoring report is stored in the resource; and/or, the monitoring report is stored in another pre-created resource except the resource.

Alternatively, after the step that the received second monitoring identifier is stored in the resource, the method may further include that: a second monitoring stopping request message is sent to the bearer network, wherein the second monitoring stopping request message may include a second monitoring identifier attribute of the resource, and the second monitoring stopping request message may be configured to instruct the bearer network to stop monitoring corresponding to a value of the second monitoring identifier attribute.

Alternatively, after the step that the received second monitoring identifier is stored in the resource, the method may further include that: a second monitoring updating request message is sent to the bearer network, wherein the second monitoring updating request message may include the second monitoring identifier attribute of the resource and at least one of attributes obtained by updating the identifier attribute of the target to be monitored, the attribute of the event to be monitored, the attribute indicating the processing manner performed after occurrence of the event, the monitoring time length attribute, the monitoring report number attribute, the attribute indicating the time when the monitoring ends and the attribute indicating the time when the monitoring starts, respectively.

Alternatively, after the step that the event to be monitored is monitored according to the attribute of the resource, the method may further include that: a third monitoring stopping request message is sent to the bearer network, wherein the third monitoring stopping request message may include the third monitoring identifier attribute of the resource, and the third monitoring stopping request message may be configured to instruct the bearer network to stop monitoring corresponding to the value of the third monitoring identifier attribute.

Alternatively, after the step that the event to be monitored is monitored according to the attribute of the resource, the method may further include that: a third monitoring updating request message is sent to the bearer network, wherein the third monitoring updating request message may include the third monitoring identifier attribute of the resource and at least one of attributes obtained by updating the identifier attribute of the target to be monitored, the attribute of the event to be monitored, the attribute indicating the processing manner performed after occurrence of the event, the monitoring time length attribute, the monitoring report number attribute, the attribute indicating the time when the monitoring ends and the attribute indicating the time when the monitoring starts, respectively.

According to another aspect of the invention, a monitoring management device is provided, which may include: a first receiving module, configured to receive from a monitoring initiator a request message for requesting creation of a resource, wherein the resource may be configured for monitoring management, and the request message may include at least the following parameter: an event to be monitored; a creation module, configured to create the resource according to the request message, and create an attribute of the resource according to the parameter included in the request message; a monitoring module, configured to monitor the event to be monitored according to the attribute of the resource; and a first storage module, configured to receive and store a monitoring report, wherein the monitoring report may contain a monitoring result.

Alternatively, the request message may further include at least one of an identifier of a target to be monitored, a first monitoring identifier for identifying a monitoring task, a processing manner performed after occurrence of the event to be monitored, a monitoring time length, a monitoring report number, a time when a monitoring ends and a time when a monitoring starts.

Alternatively, the monitoring module may include: sending a monitoring request message to a bearer network according to the attribute of the resource, wherein the monitoring request message may be configured to instruct the bearer network to monitor the event to be monitored, and the monitoring request message may include the attribute of the resource.

Alternatively, the device may further include: a second receiving module, configured to receive a second monitoring identifier allocated by the bearer network; and a second storage module, configured to store the received second monitoring identifier in the resource.

Alternatively, the device may further include: an allocation module, configured to allocate a third monitoring identifier; and a second creation module, configured to create a third monitoring identifier attribute for the resource, and set a value of the created third monitoring identifier attribute to be the allocated third monitoring identifier.

Alternatively, the device may further include: a first sending module, configured to send a first monitoring stopping request message to the bearer network, wherein the first monitoring stopping request message may include a first monitoring identifier attribute of the resource, and the first monitoring stopping request message may be configured to instruct the bearer network to stop monitoring corresponding to a value of the first monitoring identifier attribute.

Alternatively, the device may further include: a second sending module, configured to send a first monitoring updating request message to the bearer network, wherein the first monitoring updating request message may include the first monitoring identifier attribute of the resource and at least one of attributes obtained by updating an identifier attribute of the target to be monitored, an event to be monitored attribute, an attribute indicating a processing manner performed after occurrence of the event, a monitoring time length attribute, a monitoring report number attribute, an attribute indicating a time when a monitoring ends and an attribute indicating a time when a monitoring starts, respectively.

Alternatively, the first storage module may include: a first storage unit, configured to store the monitoring report in the resource; and/or, a second storage unit, configured to store the monitoring report in another pre-created resource except the resource.

Alternatively, the device may further include: a third sending module, configured to, after the received second monitoring identifier is stored in the resource, send a second monitoring stopping request message to the bearer network, wherein the second monitoring stopping request message may include a second monitoring identifier attribute of the resource, and the second monitoring stopping request message may be configured to instruct the bearer network to stop monitoring corresponding to a value of the second monitoring identifier attribute.

Alternatively, the device may further include: a fourth sending module, configured to, after the received second monitoring identifier is stored in the resource, send a second monitoring updating request message to the bearer network, wherein the second monitoring updating request message may include the second monitoring identifier attribute of the resource and at least one of attributes obtained by updating the identifier attribute of the target to be monitored, the attribute of the event to be monitored, the attribute indicating the processing manner performed after occurrence of the event, the monitoring time length attribute, the monitoring report number attribute, the attribute indicating the time when the monitoring ends and the attribute indicating the time when the monitoring starts, respectively.

Alternatively, the device may further include: a fifth sending module, configured to, after the event to be monitored is monitored according to the attribute of the resource, send a third monitoring stopping request message to the bearer network, wherein the third monitoring stopping request message may include the third monitoring identifier attribute of the resource, and the third monitoring stopping request message may be configured to instruct the bearer network to stop monitoring corresponding to the value of the third monitoring identifier attribute.

Alternatively, the device may further include: a sixth sending module, configured to, after the event to be monitored is monitored according to the attribute of the resource, send a third monitoring updating request message to the bearer network, wherein the third monitoring updating request message may include the third monitoring identifier attribute of the resource and at least one of attributes obtained by updating the identifier attribute of the target to be monitored, the attribute of the event to be monitored, the attribute indicating the processing manner performed after occurrence of the event, the monitoring time length attribute, the monitoring report number attribute, the attribute indicating the time when the monitoring ends and the attribute indicating the time when the monitoring starts, respectively.

According to the invention, the request message configured to create the resource is received from the monitoring initiator, wherein the resource is configured for monitoring management, and the request message contains at least the following parameter: the event to be monitored; the resource is created according to the request message, and the attribute of the resource is created according to the parameter included in the request message; the event to be monitored is monitored according to the attribute of the resource; and the monitoring report is received and stored, wherein the monitoring report contains the monitoring result. The problem of resource waste formed when the target to be monitored is monitored in the related technology is solved, and an effect of avoiding resource waste is further achieved.

### BRIEF DESCRIPTION OF DRAWINGS

The drawings described here are intended to provide a further understanding to the invention, and form a part of the invention. Illustrated embodiments of the invention and descriptions thereof are adopted to explain the invention and not intended to form improper limits to the invention. In the drawings:
FIG. 1 is a diagram of an M2M system architecture in the related technology.
FIG. 2 is a flowchart of a monitoring management method according to an embodiment of the invention.
FIG. 3 is a block diagram illustrating a structure of a monitoring management device according to an embodiment of the invention.
FIG. 4 is a block diagram illustrating a first preferred structure of a monitoring management device according to an embodiment of the invention.
FIG. 5 is a block diagram illustrating a second preferred structure of a monitoring management device according to an embodiment of the invention.
FIG. 6 is a block diagram illustrating a third preferred structure of a monitoring management device according to an embodiment of the invention.
FIG. 7 is a block diagram illustrating a fourth preferred structure of a monitoring management device according to an embodiment of the invention.
FIG. 8 is a block diagram illustrating a structure of a first storage module 38 in a monitoring management device according to an embodiment of the invention.

### DETAILED DESCRIPTION

The invention will be described below in detail with reference to the drawings in conjunction with the embodiments. It is to be noted that the embodiments in the invention and characteristics in the embodiments may be combined as long as they do not conflicts with each other.

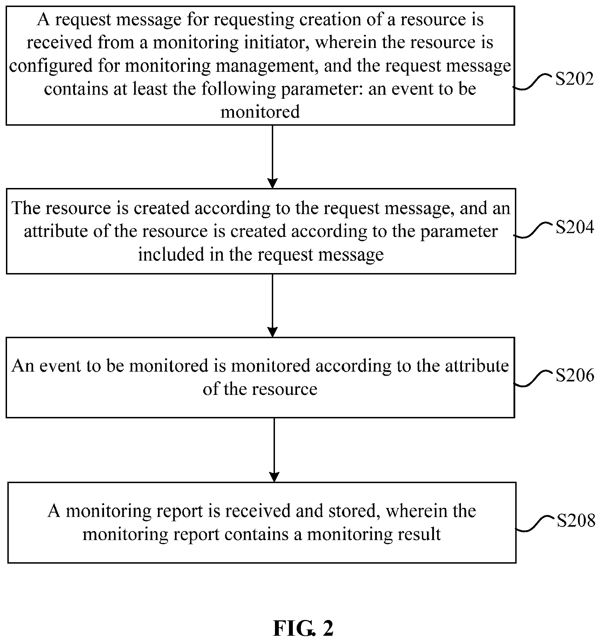

An embodiment provides a monitoring management method. FIG. 2 is a flowchart of a monitoring management method according to an embodiment of the invention. As illustrated in FIG. 2, the flow includes the following steps.

In Step S202, a request message for requesting creation of a resource is received from a monitoring initiator. The resource is configured for monitoring management. The request message contains at least the following parameter: an event to be monitored.

In Step S204, the resource is created according to the request message, and an attribute of the resource is created according to the parameter included in the request message.

In Step S206, the event to be monitored is monitored according to the attribute of the resource.

In Step S208, a monitoring report is received and stored. Here, the monitoring report contains a monitoring result.

Here, the attribute of the created resource may correspond to the respective parameters contained in the request message. That is, a number of parameters contained in the request message is the same as a number of attributes created for the resource and corresponding to the parameters. By the steps, after the request message configured to request for creating the resource is received from the monitoring initiator, the resource configured for monitoring management is created, the event to be monitored is monitored according to the attribute of the resource, and the monitoring result is received and stored. In such a manner, when there is another monitor requesting for monitoring a target to be monitored, the stored monitoring result may be directly sent to the other monitor. As such, information interaction with the target to be monitored is reduced, and resource waste is avoided. Therefore, the problem of resource waste formed when the target to be monitored is monitored in the related technology is solved, and an effect of avoiding resource waste is further achieved. Here, the event to be monitored may refer to a content to be monitored by a bearer network, such as the following event definitions 1) and 2).

The definition 1) defines whether a terminal is offline, configured to instruct the bearer network to detect an online state of the terminal and send the monitoring report to CSE once the terminal is offline. Here, such an event requires an identifier parameter of the target to be monitored.

The definition 2) defines a position change of the terminal, configured to instruct the bearer network to send the monitoring report to the CSE when a change in the position of the terminal is detected. Here, such an event requires the identifier parameter of the target to be monitored.

The definition 3) defines a number of terminals in a specified region: configured to instruct the bearer network to feed back a number of online terminals in the specified region.

There may be multiple types of parameters contained in the request message. In an optional embodiment, the request message may further include at least one of an identifier of a target to be monitored, a first monitoring identifier for identifying a monitoring task, a processing manner performed after occurrence of the event to be monitored, a monitoring time length, a monitoring report number, a time when a monitoring ends and a time when a monitoring starts.

When the event to be monitored is monitored, the event to be monitored may be monitored through the bearer network. In an optional embodiment, the step that the event to be monitored is monitored according to the attribute of the resource includes that: a monitoring request message is sent to the bearer network according to the attribute of the resource. Here, the monitoring request message may be configured to instruct the bearer network to monitor the event to be monitored. The monitoring request message may contain the attribute of the resource. Here, the request message may contain all attributes of the resource. That is, when the event to be monitored is to be monitored, a monitoring process may be implemented by virtue of the bearer network. Therefore, the monitoring report may also be monitoring result information which may be reported by the bearer network and related to the event to be monitored.

There are multiple allocation manners for the monitoring identifier. In an optional embodiment, after the step that the monitoring request message is sent to the bearer network according to the attribute of the resource, the method may further include that: a second monitoring identifier allocated by the bearer network is received; and the received second monitoring identifier is stored in the resource. It is to be noted that the second monitoring identifier may be allocated by the bearer network no matter whether the attribute of the resource includes an attribute corresponding to a first monitoring identifier. It is also to be noted that the first monitoring identifier and the second monitoring identifier may be the same, and may also be different from each other. It is the bearer network which executes the monitoring. Thus, the bearer network may still allocate the monitoring identifier (i.e. the second monitoring identifier) according to own naming rule and feed back the allocated monitoring identifier even though the monitoring identifier has been allocated in advance. Then a value of a monitoring identifier attribute of the resource is changed into the monitoring identifier allocated by the bearer network.

In another optional embodiment, the monitoring identifier may also be allocated in the following manner. Before the step that the event to be monitored is monitored according to the attribute of the resource, the method may further include that: a third monitoring identifier is allocated; and a third monitoring identifier attribute is created for the resource, and a value of the created third monitoring identifier attribute is set to be the allocated third monitoring identifier. The third monitoring identifier may be the same as or different from the abovementioned first monitoring identifier. Similarly, the third monitoring identifier may be the same as or different from the abovementioned second monitoring identifier. That is, the first monitoring identifier, the second monitoring identifier and the third monitoring identifier may be the same, and may also be different from each other, and two of them may be the same. It is to be noted that the third monitoring identifier may be allocated no matter whether the request message includes the first monitoring identifier or not. This unit is a unit performing monitoring management, so that a new monitoring identifier may also be allocated according to own rule, and the allocated third monitoring identifier is fed back to the monitoring initiator.

When monitoring of the event to be monitored is finished or monitoring of the event to be monitored is required to be stopped for other reasons, a monitoring behavior may be stopped in the following manner. In an optional embodiment, after the step that the monitoring request message is sent to the bearer network according to the attribute of the resource, the method may further include that: a first monitoring stopping request message is sent to the bearer network. Here, the first monitoring stopping request message may contain a first monitoring identifier attribute of the resource. The first monitoring stopping request message is configured to instruct the bearer network to stop monitoring corresponding to a value of the first monitoring identifier attribute.

In an optional embodiment, the monitoring behavior may also be updated. Updating may be updating of a node to be monitored, or updating of a parameter such as the event to be monitored and the monitoring time length. Here, after the step that the monitoring request message is sent to the bearer network according to the attribute of the resource, the method may further include that: a first monitoring updating request message is sent to the bearer network. Here, the first monitoring updating request message may contain the first monitoring identifier attribute of the resource and at least one of attributes obtained by updating an identifier attribute of the target to be monitored, an event to be monitored attribute, an attribute indicating a processing manner performed after occurrence of the event, a monitoring time length attribute, a monitoring report number attribute, an attribute indicating a time when a monitoring ends and an attribute indicating a time when a monitoring starts, respectively.

When the monitoring report is stored, the monitoring report may be stored in the created resource, or the monitoring report may be stored in another resource. For example, a dedicated resource such as a "container" resource configured to store the monitoring report may be created, or the monitoring report is stored in another created resource. Of course, the monitoring result may be returned in form of monitoring report, or in another manner.

From the above descriptions about the embodiment, there are multiple manners for allocating the monitoring identifier. One or more monitoring identifiers may be allocated in different allocation manners. When monitoring is required to be stopped, monitoring stopping requests may be sent for the allocated monitoring identifiers. In an optional embodiment, after the step that the received second monitoring identifier is stored in the resource, the method may further include that: a second monitoring stopping request message is sent to the bearer network. Here, the second monitoring stopping request message includes a second monitoring identifier attribute of the resource, and the second monitoring stopping request message is configured to instruct the bearer network to stop monitoring corresponding to a value of the second monitoring identifier attribute.

Similarly, when the monitoring behavior is required to be updated, monitoring updating requests may be sent for the allocated monitoring identifiers. In an optional embodiment, after the step that the received second monitoring identifier is stored in the resource, the method may further include that: a second monitoring updating request message is sent to the bearer network. Here, the second monitoring updating request message includes the second monitoring identifier attribute of the resource and at least one of attributes obtained by updating the identifier attribute of the target to be monitored, the attribute of the event to be monitored, the attribute indicating the processing manner performed after occurrence of the event, the monitoring time length attribute, the monitoring report number attribute, the attribute indicating the time when the monitoring ends and the attribute indicating the time when the monitoring starts, respectively.

In an optional embodiment, after the step that the event to be monitored is monitored according to the attribute of the resource, the method may further include that: a third monitoring stopping request message is sent to the bearer network. Here, the third monitoring stopping request message includes the third monitoring identifier attribute of the resource. The third monitoring stopping request message is configured to instruct the bearer network to stop monitoring corresponding to the value of the third monitoring identifier attribute.

In an optional embodiment, after the step that the event to be monitored is monitored according to the attribute of the resource, the method may further include that: a third monitoring updating request message is sent to the bearer network. Here, the third monitoring updating request message may contain the third monitoring identifier attribute of the resource and at least one of attributes obtained by updating the identifier attribute of the target to be monitored, the attribute of the event to be monitored, the attribute indicating the processing manner performed after occurrence of the event, the monitoring time length attribute, the monitoring report number attribute, the attribute indicating the time when the monitoring ends and the attribute indicating the time when the monitoring starts, respectively.

An embodiment further provides a monitoring management device. The device is configured to implement the abovementioned embodiments and preferred implementation modes, and what has been described will not be elaborated. For example, term "module", as used below, may be a combination of software and/or hardware capable of realizing a predetermined function. Although the device described in the following embodiment is preferably implemented with software, implementation with hardware or a combination of the software and the hardware is also possible and conceivable.

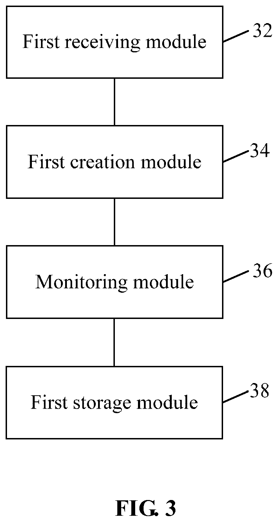

FIG. 3 is a block diagram illustrating a structure of a monitoring management device according to an embodiment of the invention. As illustrated in FIG. 3, the device includes a first receiving module 32, a first creation module 34, a monitoring module 36 and a first storage module 38. The device will be described below.

The first receiving module 32 is configured to receive from a monitoring initiator a request message for requesting creation of a resource. Here, the resource may be configured for monitoring management. The request message may contain at least the following parameter: an event to be monitored. The creation module 34 is connected to the first receiving module 32 and configured to create the resource according to the request message, and create an attribute of the resource according to the parameter included in the request message. The monitoring module 36 is connected to the first creation module 34 and configured to monitor the event to be monitored according to the attribute of the resource. The first storage module 38 is connected to the monitoring module 36 and configured to receive and store a monitoring report. Here, the monitoring report contains a monitoring result.

Here, the request message may further include at least one of an identifier of a target to be monitored, a first monitoring identifier for identifying a monitoring task, a processing manner performed after occurrence of the event to be monitored, a monitoring time length, a monitoring report number, a time when a monitoring ends and a time when a monitoring starts.

The monitoring module 36 may send a monitoring request message to a bearer network according to the attribute of the resource. Here, the monitoring request message may be configured to instruct the bearer network to monitor the event to be monitored. The monitoring request message may include the attribute of the resource.

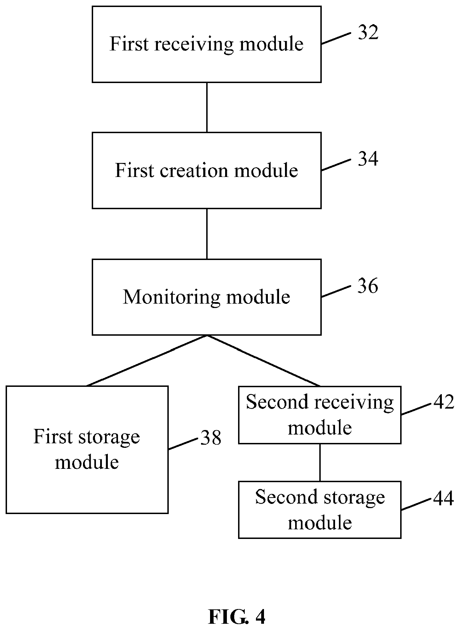

FIG. 4 is a block diagram illustrating a first preferred structure of a monitoring management device according to an embodiment of the invention. As illustrated in FIG. 4, the device may further include, in addition to all the modules illustrated in FIG. 3, a second receiving module 42 and a second storage module 44. The device will be described below.

The second receiving module 42 ,may be connected to the monitoring module 36, and may be configured to receive a second monitoring identifier allocated by the bearer network. The second storage module 44 may be connected to the second receiving module 42, and may be configured to store the received second monitoring identifier in the resource.

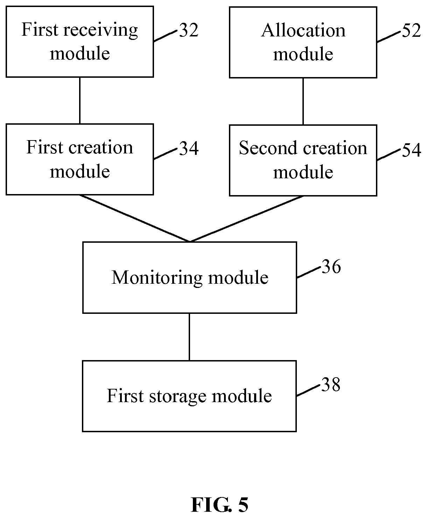

FIG. 5 is a block diagram illustrating a second preferred structure of a monitoring management device according to an embodiment of the invention. As illustrated in FIG. 5, the device may further include, in addition to all the modules as illustrated in FIG. 3, an allocation module 52 and a second creation module 54. The device will be described below.

The allocation module 52 may be configured to allocate a third monitoring identifier. The second creation module 54 may be connected to the allocation module 52 and the monitoring module 36, and may be configured to create a third monitoring identifier attribute for the resource, and set a value of the created third monitoring identifier attribute to be the allocated third monitoring identifier.

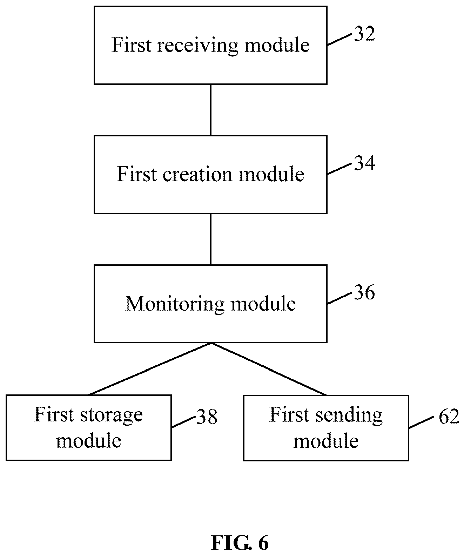

FIG. 6 is a block diagram illustrating a third preferred structure of a monitoring management device according to an embodiment of the invention. As illustrated in FIG. 6, the device may further include, in addition to all the modules illustrated in FIG. 3, a first sending module 62. The device will be described below.

The first sending module 62 may be connected to the monitoring module 36, and may be configured to send a first monitoring stopping request message to the bearer network. Here, the first monitoring stopping request message may include a first monitoring identifier attribute of the resource. The first monitoring stopping request message may be configured to instruct the bearer network to stop monitoring corresponding to a value of the first monitoring identifier attribute.

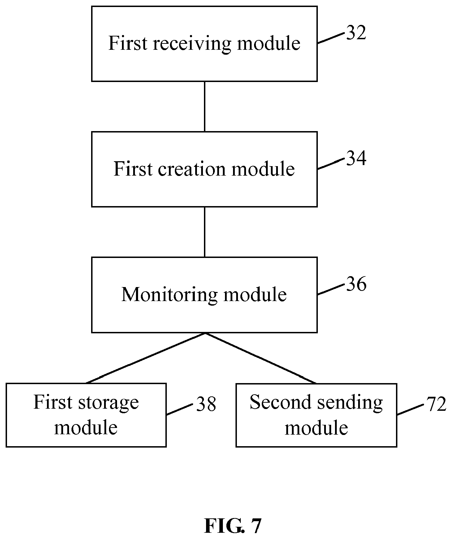

FIG. 7 is a block diagram illustrating a fourth preferred structure of a monitoring management device according to an embodiment of the invention. As illustrated in FIG. 7, the device may further include, in addition to all the modules as illustrated in FIG. 3, a second sending module 72. The device will be described below.

The second sending module 72 may be connected to the monitoring module 36, and may be configured to send a first monitoring updating request message to the bearer network. Here, the first monitoring updating request message may include the first monitoring identifier attribute of the resource and at least one of attributes obtained by updating an identifier attribute of the target to be monitored, an attribute indicating an event to be monitored, an attribute indicating a processing manner performed after occurrence of the event, a monitoring time length attribute, a monitoring report number attribute, an attribute indicating a time when a monitoring ends and an attribute indicating a time when a monitoring starts, respectively.

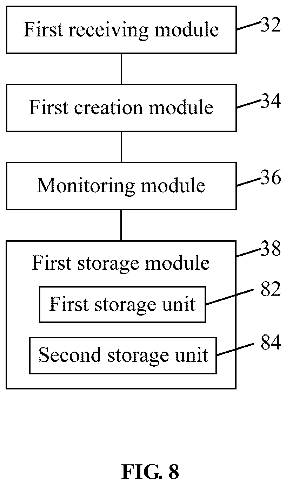

FIG. 8 is a block diagram illustrating a structure of a first storage module 38 in a monitoring management device according to an embodiment of the invention. As illustrated in FIG. 8, the first storage module 38 may include a first storage unit 82 and/or a second storage unit 84. The storage module 38 will be described below.

The first storage unit 82 may be configured to store the monitoring report in the resource. The second storage unit 84 may be configured to store the monitoring report in another pre-created resource except the resource.

In an optional embodiment, a monitoring management device may be further provided. The device may further include, in addition to all the modules as illustrated in FIG. 4, a third sending module. The third sending module may be connected to the second storage module 44, and may be configured to, after the received second monitoring identifier is stored in the resource, send a second monitoring stopping request message to the bearer network. Here, the second monitoring stopping request message may include a second monitoring identifier attribute of the resource. The second monitoring stopping request message may be configured to instruct the bearer network to stop monitoring corresponding to a value of the second monitoring identifier attribute.

In an optional embodiment, a monitoring management device may be further provided. The device may further include, in addition to all the modules as illustrated in FIG. 4, a fourth sending module. The fourth sending module may be connected to the second storage module 44, and may be configured to, after the received second monitoring identifier is stored in the resource, send a second monitoring updating request message to the bearer network. Here, the second monitoring updating request message may include the second monitoring identifier attribute of the resource and at least one of attributes obtained by updating the identifier attribute of the target to be monitored, the attribute of the event to be monitored, the attribute indicating the processing manner performed after occurrence of the event, the monitoring time length attribute, the monitoring report number attribute, the attribute indicating the time when the monitoring ends and the attribute indicating the time when the monitoring starts, respectively.

In an optional embodiment, a monitoring management device may be further provided. The device may further include, in addition to all the modules illustrated in FIG. 5, a fifth sending module. The fifth sending module may be connected to the monitoring module 36, and may be configured to, after the event to be monitored is monitored according to the attribute of the resource, send a third monitoring stopping request message to the bearer network. Here, the third monitoring stopping request message includes the third monitoring identifier attribute of the resource. The third monitoring stopping request message is configured to instruct the bearer network to stop monitoring corresponding to the value of the third monitoring identifier attribute.

In an optional embodiment, a monitoring management device may be further provided. The device may further include, in addition to all the modules as illustrated in FIG. 5, a sixth sending module. The sixth sending module may be connected to the monitoring module 36, and may be configured to, after the event to be monitored is monitored according to the attribute of the resource, send a third monitoring updating request message to the bearer network. Here, the third monitoring updating request message may include the third monitoring identifier attribute of the resource and at least one of attributes obtained by updating the identifier attribute of the target to be monitored, the attribute indicating the event to be monitored, the attribute indicating the processing manner performed after occurrence of the event, the monitoring time length attribute, the monitoring report number attribute, the attribute indicating the time when the monitoring ends and the attribute indicating the time when the monitoring starts, respectively.

A method provided by the invention for monitoring an application node through CSE management will be described below in combination with a specific embodiment.
1: An initiator (which may be an AE or CSE) (equivalent to the abovementioned monitoring initiator) sends a resource creation request message (equivalent to the abovementioned request message) to registration CSE. Here, the resource creation request message may include at least one of the following parameter combinations:
   1) a resource type (which may be monitoring management), a target to be monitored (which may be an identifier of the monitored node) and an event to be monitored (which may be defined according to an event required to be monitored);
   2) the resource type, the target to be monitored, the event to be monitored and a monitoring identifier (equivalent to the abovementioned first monitoring identifier). Here, the monitoring identifier is used for identifying a monitoring task, the monitoring task may indicate that a specified event to be monitored of the specified target to be monitored will be detected, and the identifier may be configured to identify a monitoring process during interaction with a bearer network;
   3) the resource type, the target to be monitored, the event to be monitored and a processing manner performed after occurrence of the event. Here, the processing manner after occurrence of the event may be a processing manner performed after the bearer network detects occurrence of the defined event. For example, a connection with the network is cut off and data receiving and sending scheduling units of the node are reduced;
   4) the resource type, the target to be monitored, the event to be monitored and a monitoring time length. Here, the monitoring time length may be a duration of the monitoring task;
   5) the resource type, the target to be monitored, the event to be monitored and a monitoring report number. Here, the monitoring report number is a number of monitoring reports sent by the bearer network to the CSE after occurrence of the defined event is detected, and the monitoring report number refers to how many times will the bearer network send the monitoring report;
   6) the resource type, the target to be monitored, the event to be monitored and a time when a monitoring ends. Here, the time when the monitoring ends indicates an execution ending time of the monitoring task;
   7) the resource type, the target to be monitored, the event to be monitored and a time when a monitoring starts. Here, the time when the monitoring starts may indicate that the monitoring task is started at a specified time;
   8) the resource type, the target to be monitored, the event to be monitored, the time when the monitoring starts and the monitoring time length;
   9) the resource type, the target to be monitored, the event to be monitored, the time when the monitoring starts and the time when the monitoring ends; and
   10) the resource type, the event to be monitored and the monitoring time length.

   It is to be noted that the parameter "processing manner after occurrence of the event" in the combination 3) may be added into the combinations 4)-10), thereby forming new combinations 11)-16).
   The parameter "monitoring identifier" in the combination 2) may be added into the combinations 3)-16), thereby forming new combinations 27)-30).
   Here, there are two main scenarios with the "monitoring identifier" and without the "monitoring identifier". When the resource creation request message does not include the monitoring identifier, the monitoring identifier may be acquired in the following two manners. A first manner of the two manners is that the registration CSE allocates the monitoring identifier (when the monitoring identifier is allocated by the CSE, the allocated monitoring identifier is a third monitoring identifier) and sends it to the bearer network. The other manner of the two manners is allocation by the bearer network, and the bearer network allocates the monitoring identifier (when the monitoring identifier is allocated by the bearer network, the allocated monitoring identifier is a second monitoring identifier) after receiving a monitoring request of the registration CSE and then sends it to the registration CSE.
2: After receiving a resource creation request, the registration CSE verifies whether it supports a resource of a "monitoring management" type or not, verifies whether the initiator has a resource creation right or not, and if verification succeeds, create the resource of the "monitoring management" type and creates an attribute for the resource of the "monitoring management" type according to a parameter included in the resource creation request.
   Here, the attribute may be created in two manners.
   A first manner: the registration CSE creates a corresponding attribute for each parameter in each combination in 1. For example, for the combination 1), the registration CSE creates an attribute "monitoring target", of which a value is set to be a value of the parameter "monitoring target" in the resource creation request message, and creates an attribute "monitoring event", of which a value is set to be a value of the parameter "monitoring event" in the resource creation request message.
   A second manner: the registration CSE creates an attribute "monitoring task", and then places all parameters related to the monitoring task in the attribute.
3: The registration CSE creates a resource of a "container" type associated with the resource of the "monitoring management" type to store a monitoring report sent by the bearer network.
4: The registration CSE sends a monitoring request message to the bearer network. Here, the parameters, except the resource type, in each combination in 1 are included, and may be collectively referred to as "monitoring parameter" herein.
5: The bearer network receives the monitoring request message, and when the request message includes no monitoring identifier, allocates the monitoring identifier for the monitoring task in the current monitoring request message, and contains it in a response message for sending to the registration CSE, and the registration CSE stores the monitoring identifier as an attribute.
6: The registration CSE sends a monitoring stopping request message to the bearer network, the request message including the monitoring identifier. Here,, when the monitoring identifier corresponds to the abovementioned first monitoring identifier, the monitoring stopping request message corresponds to the abovementioned first monitoring stopping request message; when the monitoring identifier corresponds to the abovementioned second monitoring identifier, the monitoring stopping request message corresponds to the abovementioned second monitoring stopping request message; and when the monitoring identifier corresponds to the abovementioned third monitoring identifier, the monitoring stopping request message corresponds to the abovementioned third monitoring stopping request message.
7: The registration CSE sends a monitoring updating request message to the bearer network, the request message including the monitoring identifier, and a monitoring parameter required to be updated. Here, the monitoring parameter required to be updated may at least include one or more of the following parameters:
   1) the event to be monitored;
   2) the processing manner after occurrence of the event;
   3) the monitoring time length;
   4) the time when the monitoring starts;
   5) the time when the monitoring ends;
   6) the monitoring report number; and
   7) the identifier of the target to be monitored.

Here, when the monitoring updating request message is sent, if the monitoring identifier included in the monitoring updating request message corresponds to the abovementioned first monitoring identifier, the monitoring updating request message corresponds to the abovementioned first monitoring updating request message; if the monitoring identifier included in the monitoring updating request message corresponds to the abovementioned second monitoring identifier, the monitoring updating request message corresponds to the abovementioned second monitoring updating request message; and if the monitoring identifier included in the monitoring updating request message corresponds to the abovementioned third monitoring identifier, the monitoring updating request message corresponds to the abovementioned third monitoring updating request message.

Obviously, those skilled in the art should know that each module or each step of the invention may be implemented by a general purpose computing device. The modules or steps may be concentrated on a single computing device or distributed on a network formed by a plurality of computing devices, and may alternatively be implemented by program codes executable for the computing devices, so that the modules or steps may be stored in a storage device for execution with the computing devices. The illustrated or described steps may be executed in sequences different from those described here in some circumstances, or may form each integrated circuit module respectively, or multiple modules or steps therein may form a single integrated circuit module for implementation. As a consequence, the invention is not limited to any specific hardware and software combination.

The above is only the preferred embodiment of the invention and not intended to limit the invention. For those skilled in the art, the invention may have various modifications and variations.

### INDUSTRIAL APPLICABILITY

As mentioned above, the monitoring management method and device provided by the embodiments of the invention have the following beneficial effects: the problem of resource waste formed when the target to be monitored is monitored in the related technology is solved, and an effect of avoiding resource waste is further achieved.

## Claims

1. A monitoring management method, performed by a monitoring management device of a communication network, wherein the method comprises:
receiving (S202) from a monitoring initiator a request message for requesting creation of a resource, wherein the resource is configured for monitoring management, and the request message contains at least the following parameter: an event to be monitored;
creating (S204) the resource according to the request message, and creating an attribute of the resource according to the parameter contained in the request message;
sending a monitoring request message to a bearer network according to the attribute of the resource, wherein the monitoring request message is configured to instruct the bearer network to monitor the event to be monitored, and the monitoring request message contains the attribute of the resource;
receiving (S208) and storing a monitoring report, wherein the monitoring report contains a monitoring result; and
when another monitoring initiator requests for monitoring the event to be monitored, sending the stored monitoring report to the other monitoring initiator directly.

2. The method according to claim 1, wherein the request message further comprises at least one of: an identifier of a target to be monitored, a first monitoring identifier for identifying a monitoring task, a processing manner performed after occurrence of the event to be monitored, a monitoring time length, a monitoring report number, a time when a monitoring ends and a time when a monitoring starts.

3. The method according to claim 2, futher comprising, after sending the monitoring request message to the bearer network according to the attribute of the resource:
receiving a second monitoring identifier allocated by the bearer network; and
storing the received second monitoring identifier in the resource.

4. The method according to claim 2, further comprising, before sending the monitoring request message to the bearer network according to the attribute of the resource:
allocating a third monitoring identifier; and
creating a third monitoring identifier attribute for the resource, and setting a value of the created third monitoring identifier attribute to be the allocated third monitoring identifier.

5. The method according to claim 2, wherein after sending the monitoring request message to the bearer network according to the attribute of the resource, the method further comprises: sending a first monitoring updating request message to the bearer network, wherein the first monitoring updating request message contains the first monitoring identifier attribute of the resource and at least one of: attributes obtained by updating an identifier attribute of the target to be monitored, an event to be monitored attribute, an attribute indicating a processing manner performed after occurrence of the event, a monitoring time length attribute, a monitoring report number attribute, an attribute indicating a time when a monitoring ends and an attribute indicating a time when a monitoring , starts.

6. The method according to claim 1, wherein storing the monitoring report comprises:
storing the monitoring report in the resource; and/or,
storing the monitoring report in another pre-created resource except the resource.

7. The method according to claim 3, wherein, after storing the received second monitoring identifier in the resource, the method further comprises: sending a second monitoring updating request message to the bearer network, wherein the second monitoring updating request message contains the second monitoring identifier attribute of the resource and at least one of: attributes obtained by updating the identifier attribute of the target to be monitored, the attribute of the event to be monitored, the attribute indicating the processing manner performed after occurrence of the event, the monitoring time length attribute, the monitoring report number attribute, the attribute indicating the time when the monitoring ends and the attribute indicating the time when the monitoring starts.

8. The method according to claim 4, wherein after sending the monitoring request message to the bearer network according to the attribute of the resource, the method further comprises: sending a third monitoring updating request message to the bearer network, wherein the third monitoring updating request message contains the third monitoring identifier attribute of the resource and at least one of: attributes obtained by updating the identifier attribute of the target to be monitored, the attribute of the event to be monitored, the attribute indicating the processing manner performed after occurrence of the event, the monitoring time length attribute, the monitoring report number attribute, the attribute indicating the time when the monitoring ends and the attribute indicating the time when the monitoring starts.

9. A monitoring management device for a communication network, the device comprising:
a first receiving module (32), configured to receive from a monitoring initiator a request message for requesting creation of a resource, wherein the resource is configured for monitoring management, and the request message contains at least the following parameter: an event to be monitored;
a first creation module (34), configured to create the resource according to the request message, and create an attribute of the resource according to the parameter contained in the request message;
a monitoring module (36), configured to send a monitoring request message to a bearer network according to the attribute of the resource, wherein the monitoring request message is configured to instruct the bearer network to monitor the event to be monitored, and the monitoring request message contains the attribute of the resource;
a first storage module (38), configured to receive and store a monitoring report, wherein the monitoring report contains a monitoring result;
wherein the device is configured to, when another monitoring initiator requesting for monitoring the event to be monitored, send the stored monitoring report to the other monitoring initiator directly.

10. The device according to claim 9, wherein the request message further comprises at least one of: an identifier of a target to be monitored, a first monitoring identifier for identifying a monitoring task, a processing manner performed after occurrence of the event to be monitored, a monitoring time length, a monitoring report number, a time when a monitoring ends and a time when a monitoring starts.

11. The device according to claim 10, wherein the device further comprises a second receiving module (42), configured to receive a second monitoring identifier allocated by the bearer network; and a second storage module (44), configured to store the received second monitoring identifier in the resource; or wherein the device further comprises: an allocation module (52), configured to allocate a third monitoring identifier; and a second creation module (54), configured to create a third monitoring identifier attribute for the resource, and set a value of the created third monitoring identifier attribute to be the allocated third monitoring identifier.

12. The device according to claim 11, wherein the device further comprises: a second sending module (72), configured to send a first monitoring updating request message to the bearer network, wherein the first monitoring updating request message contains the first monitoring identifier attribute of the resource and at least one of: attributes obtained by updating an identifier attribute of the target to be monitored, an attribute of an event to be monitored, an attribute indicating a processing manner performed after occurrence of the event, a monitoring time length attribute, a monitoring report number attribute, an attribute indicating a time when a monitoring ends and an attribute indicating a time when a monitoring starts.

13. The device according to claim 9, wherein the first storage module (38) comprises:
a first storage unit (82), configured to store the monitoring report in the resource; and/or,
a second storage unit (84), configured to store the monitoring report in another pre-created resource except the resource.

14. The device according to claim 11, wherein the device further comprises: a fourth sending module, configured to, after the received second monitoring identifier is stored in the resource, send a second monitoring updating request message to the bearer network, wherein the second monitoring updating request message contains the second monitoring identifier attribute of the resource and at least one of: attributes obtained by updating the identifier attribute of the target to be monitored, the attribute of the event to be monitored, the attribute indicating the processing manner performed after occurrence of the event, the monitoring time length attribute, the monitoring report number attribute, the attribute indicating the time when the monitoring ends and the attribute indicating the time when the monitoring starts.

## Patentansprüche

1. Überwachungsmanagementverfahren, das von einer Überwachungsverwaltungsvorrichtung eines Kommunikationsnetzwerks durchgeführt wird, wobei das Verfahren umfasst:
Empfangen (S202) einer Anfragenachricht von einem Überwachungsinitiator zum Anfragen der Erstellung einer Ressource, wobei die Ressource für das Überwachungsmanagement konfiguriert ist und die Anfragenachricht mindestens die folgenden Parameter enthält: ein zu überwachendes Ereignis;
Erstellen (S204) der Ressource gemäß der Anfragenachricht und Erstellen eines Attributs der Ressource gemäß dem in der Anfragenachricht enthaltenen Parameter;
Senden einer Überwachungsanfragenachricht an ein Trägernetzwerk gemäß dem Attribut der Ressource, wobei die Überwachungsanfragenachricht konfiguriert ist, um das Trägernetzwerk anzuweisen, das zu überwachende Ereignis zu überwachen, und die Überwachungsanfragenachricht das Attribut der Ressource enthält;
Empfangen (S208) und Speichern eines Überwachungsberichts, wobei der Überwachungsbericht ein Überwachungsergebnis enthält; und
wenn ein anderer Überwachungsinitiator die Überwachung des zu überwachenden Ereignisses anfordert, Senden des gespeicherten Überwachungsberichts direkt an den anderen Überwachungsinitiator.

2. Verfahren nach Anspruch 1, wobei die Anfragenachricht ferner mindestens umfasst:
eine Identifikation eines zu überwachenden Ziels, eine erste Überwachungsidentifikation, zum Identifizieren einer Überwachungsaufgabe, eine Verarbeitungsweise, die nach Eintritt des zu überwachenden Ereignisses durchgeführt wird, eine Überwachungszeitspanne, eine Überwachungsberichtsnummer, eine Zeit, zu der eine Überwachung endet und eine Zeit, zu der eine Überwachung beginnt.

3. Verfahren nach Anspruch 2, wobei das Verfahren nach dem Senden der Überwachungsanfragenachricht an das Trägernetzwerk gemäß dem Attribut der Ressource ferner umfassend:
Empfangen einer zweiten Überwachungsidentifikation, die vom Trägernetzwerk zugewiesen wurde; und Speichern der empfangenen zweiten Überwachungsidentifikation in der Ressource.

4. Verfahren nach Anspruch 2, wobei das Verfahren vor dem Senden der Überwachungsanfragenachricht an das Trägernetzwerk gemäß dem Attribut der Ressource ferner umfassend:
Zuweisung einer dritten Überwachungsidentifikation; und
Erstellen eines dritten Überwachungsidentifikationsattributs für die Ressource, und Einstellen eines Wertes des erstellten dritten Überwachungsidentifikationsattributs als zugeteiltes drittes Überwachungsidentifikationsattributs.

5. Verfahren nach Anspruch 2, wobei das Verfahren nach dem Senden der Überwachungsanfragenachricht an das Trägernetzwerk gemäß dem Attribut der Ressource ferner umfasst: Senden einer ersten Überwachungsaktualisierungsanfragenachricht an das Trägernetzwerk, wobei die ersten Überwachungsaktualisierungsanfragenachricht das erste Überwachungsidentifikationsattribut der Ressource und mindestens eines der folgenden enthält:
Attribute, die durch Aktualisieren eines Identifikationsattribut des zu überwachenden Ziels erhalten werden, ein zu überwachendes Ereignisattribut, ein Attribut, das eine Verarbeitungsweise angibt, die nach Auftreten des Ereignisses durchgeführt wird, ein Überwachungszeitlängenattribut, ein Überwachungsberichtsnummernattribut, ein Attribut, das eine Zeit anzeigt, zu der eine Überwachung endet, und ein Attribut, das eine Zeit angibt, zu der eine Überwachung beginnt.

6. Verfahren nach Anspruch 1, wobei das Speichern des Überwachungsberichts umfasst:
Speichern des Überwachungsberichts in der Ressource; und/oder,
Speichern des Überwachungsberichts in einer anderen vorab erstellten Ressource mit Ausnahme der Ressource.

7. Verfahren nach Anspruch 3, wobei das Verfahren nach dem Speichern der empfangenen zweiten Überwachungsidentifikation in der Ressource ferner umfasst: Senden einer zweiten Überwachungsaktualisierungsanfragenachricht an das Trägernetzwerk, wobei die zweite Überwachungsaktualisierungsanfragenachricht das zweite Überwachungsidentifikationsattribut der Ressource und mindestens eines der folgenden enthält:
Attribute, die durch Aktualisieren eines Identifikationsattribut des zu überwachenden Ziels erhalten werden, ein zu überwachendes Ereignisattribut, ein Attribut, das eine Verarbeitungsweise angibt, die nach Auftreten des Ereignisses durchgeführt wird, ein Überwachungszeitlängenattribut, ein Überwachungsberichtsnummernattribut, ein Attribut, das eine Zeit anzeigt, zu der eine Überwachung endet, und ein Attribut, das eine Zeit angibt, zu der eine Überwachung beginnt.

8. Verfahren nach Anspruch 4, wobei das Verfahren nach dem Senden der Überwachungsanfragenachricht an das Trägernetzwerk gemäß dem Attribut der Ressource ferner umfasst:
Senden einer dritten Überwachungsaktualisierungsanfragenachricht an das Trägernetzwerk, wobei die dritte Überwachungsaktualisierungsanfragenachricht das dritte Überwachungsidentifikationsattribut der Ressource und mindestens eines der folgenden enthält:
Attribute, die durch Aktualisieren eines Identifikationsattribut des zu überwachenden Ziels erhalten werden, ein zu überwachendes Ereignisattribut, ein Attribut, das eine Verarbeitungsweise angibt, die nach Auftreten des Ereignisses durchgeführt wird, ein Überwachungszeitlängenattribut, ein Überwachungsberichtsnummernattribut, ein Attribut, das eine Zeit anzeigt, zu der eine Überwachung endet, und ein Attribut, das eine Zeit angibt, zu der eine Überwachung beginnt.

9. Überwachungsverwaltungsvorrichtung für ein Kommunikationsnetzwerk, wobei die Vorrichtung umfasst:
ein erstes Empfangsmodul (32), konfiguriert, um von einer Überwachungsidentifikation eine Anfragenachricht zum Anfragen der Erstellung einer Ressource zu empfangen, wobei die Ressource zur Verwaltungsüberwachung konfiguriert ist und die Anfragenachricht mindestens den folgenden Parameter enthält: ein zu überwachendes Ereignis;
ein erstes Erstellungsmodul (34), konfiguriert, um die Ressource gemäß der Anfragenachricht zu erstellen, und ein Attribut der Ressource gemäß dem in der Anfragenachricht enthaltenen Parameter zu erstellen;
ein Überwachungsmodul (36), konfiguriert zum Senden einer Überwachungsanfragenachricht an ein Trägernetzwerk gemäß dem Attribut der Ressource, wobei die Überwachungsanfragenachricht konfiguriert ist, um das Trägernetzwerk anzuweisen, das zu überwachende Ereignis zu überwachen, und die Überwachungsanfragenachricht das Attribut der Ressource enthält;
ein erstes Speichermodul (38), konfiguriert zum Empfangen und Speichern eines Überwachungsberichts, wobei der Überwachungsbericht ein Überwachungsergebnis enthält; wobei die Vorrichtung konfiguriert ist, um, wenn eine andere Überwachungsidentifikation, die das zu überwachende Ereignis anfragt, den gespeicherten Überwachungsbericht direkt an die andere Überwachungsidentifikation zu senden.

10. Die Vorrichtung nach Anspruch 9, wobei die Anfragenachricht ferner mindestens eines der folgenden umfasst:
eine Identifikation eines zu überwachenden Ziels, eine erste, Überwachungsidentifikation, um eine Überwachungsaufgabe zu identifizieren, eine Verarbeitungsweise, die nach Auftreten des zu überwachenden Ereignisses durchgeführt wird, eine Überwachungszeitspanne, eine Überwachungsberichtsnummer, eine Zeit, zu der eine Überwachung endet, und eine Zeit, zu der eine Überwachung beginnt.

11. Die Vorrichtung nach Anspruch 10, wobei die Vorrichtung ferner ein zweites Empfangsmodul (42), konfiguriert zum Empfangen einer zweiten Überwachungsidentifikation, die durch das Trägernetzwerk zugewiesen ist, und ein zweites Speichermodul (44), konfiguriert zum Speichern der empfangenen zweiten Überwachungsidentifikation in der Ressource umfasst;
oder wobei die Vorrichtung ferner umfasst: ein Zuordnungsmodul (52), konfiguriert, um eine dritte Überwachungsidentifikation zuzuweisen; und ein zweites Erstellungsmodul (54), konfiguriert, um ein drittes Überwachungsidentifikationsattribut für die Ressource zu erstellen, und einen Wert des erstellten dritten Überwachungsidentifikationsattributs als die zugeordnete dritte Überwachungsidentifikation einzustellen.

12. Die Vorrichtung nach Anspruch 11, wobei die Vorrichtung ferner umfasst: ein zweites Sendemodul (72), konfiguriert, um eine erste Überwachungsaktualisierungsanfragenachricht an das Trägernetzwerk zu senden, wobei die erste Überwachungsaktualisierungsanfragenachricht das erste Überwachungsidentifikationsattribut der Ressource und mindestens eines der folgenden enthält:
Attribute, die durch Aktualisieren eines Identifikationsattribut des zu überwachenden Ziels erhalten werden, ein zu überwachendes Ereignisattribut, ein Attribut, das eine Verarbeitungsweise angibt, die nach Auftreten des Ereignisses durchgeführt wird, ein Überwachungszeitlängenattribut, ein Überwachungsberichtsnummernattribut, ein Attribut, das eine Zeit anzeigt, zu der eine Überwachung endet, und ein Attribut, das eine Zeit angibt, zu der eine Überwachung beginnt.

13. Die Vorrichtung nach Anspruch 9, wobei das erste Speichermodul (38) umfasst:
eine erste Speichereinheit (82), konfiguriert, um den Überwachungsbericht in der Ressource zu speichern; und/oder,
eine zweite Speichereinheit (84), konfiguriert, um den Überwachungsbericht in einer anderen vorab erstellten Ressource außer der Ressource zu speichern.

14. Die Vorrichtung nach Anspruch 11, wobei die Vorrichtung ferner umfasst: ein viertes Sendemodul, konfiguriert, um, nachdem die empfangene zweite Überwachungsidentifikation in der Ressource gespeichert ist, eine zweite Überwachungsaktualisierungsanfragenachricht an das Trägernetzwerk zu senden, wobei die zweite Überwachungsaktualisierungsanfragenachricht das zweite Überwachungsidentifikationsattribut der Ressource und mindestens eines der folgenden enthält:
Attribute, die durch Aktualisieren eines Identifikationsattribut des zu überwachenden Ziels erhalten werden, ein zu überwachendes Ereignisattribut, ein Attribut, das eine Verarbeitungsweise angibt, die nach Auftreten des Ereignisses durchgeführt wird, ein Überwachungszeitlängenattribut, ein Überwachungsberichtsnummernattribut, ein Attribut, das eine Zeit anzeigt, zu der eine Überwachung endet, und ein Attribut, das eine Zeit angibt, zu der eine Überwachung beginnt.

## Revendications

1. Procédé de gestion de surveillance, exécuté par un dispositif de gestion de surveillance d'un réseau de communication, dans lequel le procédé comprend :
la réception (S202) d'un initiateur de surveillance d'un message de demande pour demander la création d'une ressource, dans lequel la ressource est configurée pour la gestion de surveillance, et le message de demande contient au moins le paramètre suivant : un événement à surveiller ;
la création (S204) de la ressource selon le message de demande, et créer un attribut de la ressource selon le paramètre contenu dans le message de demande ;
la transmission d'un message de demande de surveillance à un réseau porteur selon l'attribut de la ressource, le message de demande de surveillance étant configuré pour demander au réseau porteur de surveiller l'événement à surveiller, et le message de demande de surveillance contenant l'attribut de la ressource ;
la réception (S208) et le stockage d'un rapport de surveillance, dans lequel le rapport de surveillance contient un résultat de surveillance ; et
lorsqu'un autre initiateur de surveillance demande la surveillance de l'événement à surveiller, la transmission directe du rapport de surveillance stocké à l'autre initiateur de surveillance.

2. Procédé selon la revendication 1, dans lequel le message de demande comprend en outre au moins un des éléments suivants :
une identification d'une cible à surveiller, une première identification de surveillance pour identifier une tâche de surveillance, un mode de traitement effectué après la survenance de l'événement à surveiller, une durée de surveillance, un numéro de rapport de surveillance, un moment où une surveillance prend fin et un moment où une surveillance commence.

3. Procédé selon la revendication 2, comprenant en outre, après la transmission du message de demande de surveillance au réseau porteur en fonction de l'attribut de la ressource :
la réception d'une seconde identification de surveillance alloué par le réseau porteur ; et le stockage de la seconde identification de surveillance reçu dans la ressource.

4. Procédé selon la revendication 2, comprenant en outre, avant la transmission du message de demande de surveillance au réseau porteur en fonction de l'attribut de la ressource :
l'attribution d'une troisième identification de surveillance ; et
la création d'un troisième attribut de surveillance de l'identification pour la ressource, et la définition d'une valeur du troisième attribut de surveillance de l'identification créé comme étant le troisième attribut de surveillance de l'identification attribué.

5. Procédé selon la revendication 2, dans lequel, après la transmission du message de demande de surveillance au réseau porteur selon l'attribut de la ressource, le procédé comprend en outre : la transmission au réseau porteur un premier message de demande d'actualisation de surveillance, dans lequel le premier message de demande d'actualisation de surveillance contient l'attribut de surveillance de l'identification de la ressource et au moins un parmi :
des attributs obtenus par l'actualisation d'un attribut de l'identification de la cible à surveiller, d'un attribut événement à surveiller, d'un attribut de la manière dont le traitement a été effectué après l'événement, d'un attribut durée de surveillance, d'un attribut numéro de rapport, d'un attribut indiquant temps à partir duquel une surveillance prend fin et d'un attribut indiquant un temps à partir duquel elle est lancée.

6. Procédé selon la revendication 1, dans lequel le stockage du rapport de surveillance comprend :
le stockage du rapport de surveillance dans la ressource ; et/ou,
le stockage du rapport de surveillance dans une autre ressource pré-créée à l'exception de la ressource.

7. Procédé selon la revendication 3, dans lequel, après le stockage de l'identification de surveillance reçue dans la ressource, le procédé comprend en outre :
la transmission d'un second message de demande d'actualisation de surveillance au réseau porteur, dans lequel le second message de demande d'actualisation de surveillance contient le deuxième attribut de l'identification de surveillance de la ressource et au moins un des attributs :
des attributs obtenus par l'actualisation d'un attribut de l'identification de la cible à surveiller, d'un attribut événement à surveiller, d'un attribut de la manière dont le traitement a été effectué après l'événement, d'un attribut durée de surveillance, d'un attribut numéro de rapport, d'un attribut indiquant temps à partir duquel une surveillance prend fin et d'un attribut indiquant un temps à partir duquel elle est lancée.

8. Procédé selon la revendication 4, dans lequel, après la transmission du message de demande de surveillance au réseau porteur selon l'attribut de la ressource, le procédé comprend en outre :
la transmission d'un troisième message de demande d'actualisation de surveillance au réseau porteur, le troisième message de demande d'actualisation de surveillance contenant le troisième attribut de l'identification de surveillance de la ressource et au moins un des éléments :
des attributs obtenus par l'actualisation d'un attribut de l'identification de la cible à surveiller, d'un attribut événement à surveiller, d'un attribut de la manière dont le traitement a été effectué après l'événement, d'un attribut durée de surveillance, d'un attribut numéro de rapport, d'un attribut indiquant temps à partir duquel une surveillance prend fin et d'un attribut indiquant un temps à partir duquel elle est lancée.

9. Dispositif de gestion de surveillance pour un réseau de communication, le dispositif comprenant :
un premier module de réception (32), configuré pour la réception par une identification de surveillance d'un message de demande pour demander la création d'une ressource, la ressource étant configurée pour la gestion de surveillance et le message de demande contenant au moins le paramètre suivant : un événement à surveiller ;
un premier module de création (34), configuré pour la création de la ressource en fonction du message de demande, et la création d'un attribut de la ressource en fonction du paramètre contenu dans le message de demande ;
un module de surveillance (36), configuré pour la transmission d'un message de demande de surveillance à un réseau porteur selon l'attribut de la ressource, le message de demande de surveillance étant configuré pour demander au réseau porteur de surveiller l'événement à surveiller, et le message de demande de surveillance contenant l'attribut de la ressource ;
un premier module de stockage (38), configuré pour la réception et le stockage d'un rapport de surveillance, le rapport de surveillance contenant un résultat de surveillance, le dispositif étant configuré pour envoyer directement le rapport de surveillance stocké à l'autre identification de surveillance lorsqu'un autre identification de surveillance demande à surveiller l'événement à surveiller.

10. Dispositif selon la revendication 9, dans lequel le message de demande comprend en outre au moins l'un de :
une identification d'une cible à surveiller, une première identification de surveillance pour identifier une tâche de surveillance, un mode de traitement effectué après la survenance de l'événement à surveiller, une durée de surveillance, un numéro de rapport de surveillance, un moment où une surveillance prend fin et un moment où une surveillance commence.

11. Dispositif selon la revendication 10, dans lequel le dispositif comprend en outre un deuxième module de réception (42), configuré pour la réception d'une deuxième identification de surveillance attribuée par le réseau porteur ; et un deuxième module de stockage (44), configuré pour le stockage du deuxième identification de surveillance dans le réseau ;
ou dans lequel le dispositif comprend en outre : un module d'allocation (52), configuré pour l'allocation d'une troisième identification de surveillance; et un deuxième module de création (54), configuré pour la création d'une troisième identification de surveillance attribuant la ressource et définissant une valeur de la troisième attribut de l'identification de surveillance créé comme la troisième attribut de l'identification de surveillance alloué.

12. Dispositif selon la revendication 11, dans lequel le dispositif comprend en outre : un deuxième module de transmission (72), configuré pour la transmission au réseau porteur d'un premier message de demande d'actualisation de surveillance, le premier message de demande d'actualisation de surveillance contenant la première identification de surveillance de la ressource et au moins un élément parmi :
des attributs obtenus par l'actualisation d'un attribut de l'identification de la cible à surveiller, d'un attribut événement à surveiller, d'un attribut de la manière dont le traitement a été effectué après l'événement, d'un attribut durée de surveillance, d'un attribut numéro de rapport, d'un attribut indiquant temps à partir duquel une surveillance prend fin et d'un attribut indiquant un temps à partir duquel elle est lancée.

13. Dispositif selon la revendication 9, dans lequel le premier module de stockage (38) comprend :
une première unité de stockage (82), configurée pour le stockage du rapport de surveillance dans la ressource ; et/ou,
une deuxième unité de stockage (84), configurée pour le stockage du rapport de surveillance dans une autre ressource pré-créée sauf la ressource.

14. Dispositif selon la revendication 11, dans lequel le dispositif comprend en outre : un quatrième module de transmission, configuré à, après que la deuxième identification de surveillance reçue est stockée dans la ressource, la transmission au réseau porteur un deuxième message de demande d'actualisation de surveillance, le deuxième message de demande de surveillance contenant le deuxième attribut de l'identification de la ressource et au moins un de parmi :
des attributs obtenus par l'actualisation d'un attribut de l'identification de la cible à surveiller, d'un attribut événement à surveiller, d'un attribut de la manière dont le traitement a été effectué après l'événement, d'un attribut durée de surveillance, d'un attribut numéro de rapport, d'un attribut indiquant temps à partir duquel une surveillance prend fin et d'un attribut indiquant un temps à partir duquel elle est lancée.
